(19) **Europäisches Patentamt / European Patent Office / Office européen des brevets**

(11) **EP 1 906 692 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(51) Int Cl.:
*H04W 64/00* *(2009.01)*     *G01S 5/14* *(2006.01)*
*G01S 11/02* *(2010.01)*     *G01S 13/76* *(2006.01)*
*G01S 13/87* *(2006.01)*

(21) Anmeldenummer: **07117030.2**

(22) Anmeldetag: **24.09.2007**

(54) **Verfahren zur Abstandsermittlung zwischen Netzknoten in einem Nachrichtennetzwerk**

Method for determining the distance between nodes in a messaging network

Procédé destiné à la détermination de l'intervalle entre des noeuds dans un réseau d'informations

(84) Benannte Vertragsstaaten:
**DE FR GB IT**

(30) Priorität: **26.09.2006 DE 102006045350**

(43) Veröffentlichungstag der Anmeldung:
**02.04.2008 Patentblatt 2008/14**

(73) Patentinhaber: **SIEMENS AKTIENGESELLSCHAFT
80333 München (DE)**

(72) Erfinder:
- **Alvarado, Sergio
  Moravia (CR)**
- **Frias Hidalgo, Jose Luis
  80798, München (DE)**
- **Gonzalez Galarreta, Rafael
  89231, Neu-Ulm (DE)**
- **Ramirez, Alejandro
  80799, München (DE)**
- **Schwingenschlögl, Christian
  85640, Putzbrunn (DE)**

(56) Entgegenhaltungen:
**EP-A- 1 545 145    US-A1- 2004 002 346**

- **IZQUIERDO F., CIURANA M., BARCELO F., PARADELIS J., ZOLA E.: "Performance evaluation of a TOA-based trilateration method to locate terminals in WLAN" INT. SYMP. WIRELESS PERVASIVE COMPUT.; 2006 1ST INTERNATIONAL SYMPOSIUM ON WIRELESS PERVASIVE COMPUTING; 2006 1ST INTERNATIONAL SYMPOSIUM ON WIRELESS PERVASIVE COMPUTING 2006, Bd. 2006, 16. Januar 2006 (2006-01-16), - 18. Januar 2006 (2006-01-18) Seiten 1-6, XP002467036**

**EP 1 906 692 B1**

**Beschreibung**

Die Erfindung liegt auf dem technischen Gebiet der Kommunikationssysteme und betrifft ein Verfahren zur Ermittlung des Abstands zwischen zwei Netzknoten in einem paketvermittelten Nachrichtennetzwerk.

Ziel herkömmlicher drahtloser Ortsbestimmungssysteme ist die Bestimmung des physikalischen Orts einer Mobilstation in Bezug auf einen Referenzpunkt, gewöhnlich eine Basisstation. Zu diesem Zweck werden verschiedene Signaleigenschaften zwischen der Mobilstation und mehreren Basisstationen ausgewertet.

Drahtlose Ortsbestimmungssysteme werden üblicherweise in Mobilstation-basierte und Netzwerk-basierte Systeme eingeteilt, je nachdem, ob der Ort durch die Mobilstation selbst oder durch ein Parallelsystem, das Informationen von den Basisstationen einholt, ermittelt wird.

Ein Beispiel für ein Mobilstation-basiertes Ortsbestimmungssystem ist das GPS-System (GPS = Global Positioning System), welches von 24 im Orbit kreisenden Satelliten (Basisstationen) unterstützt wird. Jeder mit einer Atomuhr versehene Satellit sendet periodisch Signale mit einem Zeitstempel aus, aus denen seine augenblickliche Position ermittelt werden kann. Diese Signale können von einer Mobilstation empfangen und ausgewertet werden. Für eine Ortsbestimmung misst die Mobilstation die Laufzeit zwischen ihr und mehreren Satelliten, berechnet hieraus die Relativabstände und kann über einen mathematischen Algorithmus, beispielsweise die hinlänglich bekannte Trilateration, ihren Ort bestimmen. Nachteilig hierbei ist insbesondere die Tatsache, dass der GPS-Empfänger ein separates Bauteil darstellt und dass das GPS-Signal in urbanen Gebieten insbesondere durch Beton und Stahl stark geschwächt wird.

Ortsbestimmungssysteme basieren im Wesentlichen auf zwei Grundprinzipien, nämlich einer Laufzeitbestimmung, wie das oben erläuterte GPS-Verfahren, und einer Erfassung der Signalstärke eines Sendersignals, welche bei elektromagnetischen Wellen bekanntlich invers proportional mit dem Quadrat des Abstands zum Sender abfällt. Zwar können Änderungen der Signalstärke eines Signals technisch in sehr einfacher Weise erfasst werden, jedoch sind die Resultate aufgrund der sich andauernd ändernden Bedingungen in einer nicht-kontrollierbaren Umgebung wesentlich schlechter als bei den Laufzeitmessungen. Andererseits erfordern Laufzeitmessungen sehr genaue und manchmal synchronisierte Zeitgeber, so dass bislang proprietäre Hardware erforderlich ist.

In A. Günther et al. "Measuring Round Trip Times to Determine the Distance between WLAN Nodes", Telecommunication Networks Group, TU Berlin 2004, ist ein Verfahren zum Bestimmen des Abstands zwischen zwei drahtlos über ein auf dem Standard IE-EE 802.11 basierendes WLAN-Netz (WLAN = Wireless Local Area Network) verbundene Netzknoten beschrieben. In diesem Verfahren wird von einer intrinsischen Eigenschaft des Standards IEEE 802.11 Gebrauch gemacht, dass nämlich jedes Datenpaket vom Empfänger unmittelbar durch ein Bestätigungssignal bestätigt wird (ACK = Acknowledgement). Hierbei wird die Zeitdauer zweier Hin- und Rückübertragungen zwischen zwei Netzknoten gemessen und aus der deterministischen Gleichung

$$c = \frac{2 \cdot d}{\Delta t_{remote} - \Delta t_{local}}, \quad \text{mit } c \approx 3 \times 10^8 \text{ m/s (Lichtgeschwindigkeit)}$$

und $\Delta t_{remote} - \Delta t_{local}$ die Gesamtlaufzeit von Hin- und Rücksignal zwischen Sender und Empfänger, der Abstand d zwischen Sender und Empfänger bestimmt.

Wie die Praxis jedoch lehrt, ist diese Vorgehensweise mit großen Fehlern in der Abstandsbestimmung behaftet, weil die Geräteeigenschaften von Sender und Empfänger erheblichen Schwankungen unterliegen. Beispielsweise ist eine Verzögerungszeit vom Empfangen des Signals bis zum Aussenden des Bestätigungssignals vom Relativabstand zwischen Sender und Empfänger abhängig, so dass grundsätzlich keine deterministische Gleichung zur Abstandsbestimmung eingesetzt werden kann.

In A. Aassie et al. "Time of Arrival Estimation for WLAN Indoor Positioning Systems using Matrix Pencil Super Resolution Algorithm", University of Magdeburg, März 2005, ist ein Verfahren zur Bestimmung des Abstands zwischen zwei Netzknoten eines WLAN-Netzes beschrieben, bei dem die Zeitverzögerung eines zwischen Sender und Empfänger übertragenen Signals für die Abstandsmessung eingesetzt wird. Dieses Verfahren benötigt separate Hardware und synchronisierte Zeitgeber in Sender und Empfänger.

In einer Patentanmeldung US 2004/0002346 ist ein System und eine Methode beschrieben, um einen Ort eines drahtlosen Gerätes zu ermitteln.

In einem Dokument Izquierdo F., Ciurana M., Barcelo F., Paradelis J., Zola E.: "Performance evaluation of TOA-based trilateration method to locate terminals in WLAN", 1st International Symposium on Wireless Pervasive Computing, Vol. 26, Jan. 16, 2006, pp. 1 to 6, wird eine Vorgehensweise zum Bestimmen einer Position von mobilen Geräten in einer Indoor-Umgebung vorgestellt.

Ein europäisches Patent EP 1 545 145 beschreibt eine Methode zur Bestimmung einer Position einer mobilen Station innerhalb eines zellularen Telekommunikationsnetzwerkes.

In S. Bartels, "WIFI Location System", University of Waikato, Oktober 2005, wird ein von der Universität entwickeltes proprietäres WLAN-System für Abstandsmessungen verwendet.

Ein ähnliche Vorgehensweise ist in J. Lepak et al. "Speed of light measurement using ping", Youngtown State University, February 2002, beschrieben, wobei ein Schicht-3 Package (OSI-Modell) verwendet wird, um den Abstand in einem verdrahteten System zu messen. Dieses System nutzt von einem Linux-Betriebssystem gemessene Zeitunterschiede, was sehr ungenau ist, da die hierbei eingesetzten Interrupts nicht immer die gleiche Zeitspanne benötigen.

Demgegenüber liegt der vorliegenden Erfindung die Aufgabe zugrunde, ein Verfahren zur Ermittlung des Abstands zweier Netzknoten anzugeben, mit dem der Abstand zwischen zwei Netzknoten eines Nachrichtennetzwerks zuverlässig und in einfacher Weise ermittelt werden kann.

Diese Aufgabe wird nach dem Vorschlag der Erfindung durch ein Verfahren zur Ermittlung des Abstands zweier Netzknoten eines Nachrichtennetzwerks mit den Merkmalen von Anspruch 1 gelöst.

Vorteilhafte Ausgestaltungen der Erfindung sind durch die Merkmale der Unteransprüche angegeben.

Erfindungsgemäß ist ein Verfahren zur Bestimmung des Abstands zwischen Netzknoten in einem paketvermittelten Nachrichtennetzwerk gezeigt, wobei in dem Nachrichtennetzwerk zwischen den Netzknoten Signalpaare ausgetauscht werden, die jeweils aus einem Hin- und zugehörigen Rücksignal (Bestätigungssignal aus Schicht 2 des OSI-Modells) bestehen. Somit wird von einem Sender-Netzknoten ein Hinsignal an einen Empfänger-Netzknoten gesendet und vom Empfänger-Netzknoten, nach Empfang des Hinsignals, ein das Hinsignal bestätigendes Rücksignal an den Sender-Netzknoten gesendet. Im Sender-Netzknoten wird beim Senden des Hinsignals ein Zeitstempel gesetzt. Gleichermaßen wird im Sender-Netzknoten beim Empfangen des Rücksignals ein Zeitstempel gesetzt.

Von der empfangenden Hardware wird der Zeitstempel zur lokalen Zeit hinzugefügt, wenn ein Signalpaket von der physikalischen Schicht 1 (OSI-Modell) zur MAC-Schicht, das heißt zur Schicht 2 (OSI-Modell), weitergeleitet wird.

In dem erfindungsgemäßen Verfahren wird die Gesamtlaufzeit eines zwischen zwei Netzknoten ausgetauschten Signalpaars (Hin- und Rücksignal) und der zugehörige Abstand zwischen den Netzknoten erfasst. Dies wird für dieselben Netzknoten mehrfach wiederholt, wobei die Netzknoten mit einem unterschiedlichen Abstand zueinander platziert werden. Anschließend wird eine Gesamtlaufzeit-Abstand-Relation zwischen den gemessenen Gesamtlaufzeiten der Signalpaare und den erfassten Abständen der Netzknoten erstellt. Die Gesamtlaufzeit-Abstand-Relation wird vorteilhaft durch eine Ausgleichskurve, wie eine beste Anpassungskurve ("Best-fit"), insbesondere eine lineare Anpassungskurve ("Linear-Fit"), erstellt. Um einen unbekannten Abstand zwischen den beiden Netzknoten, für welche die Gesamtlaufzeit-Abstand-Relation erstellt wurde, zu bestimmen, wird zwischen diesen Netzknoten die Gesamtlaufzeit eines Signalpaars gemessen und der Abstand zwischen den Netzknoten mittels der Gesamtlaufzeit-Abstand-Relation bestimmt.

In vorteilhafter Weise werden in dem erfindungsgemäßen Verfahren bei einem gleichen Abstand zwischen Sender- und Empfänger-Netzknoten die Gesamtlaufzeiten mehrerer Hin- und Rücksignale erfasst und ein Mittelwert aus den erfassten Gesamtlaufzeiten gebildet, welcher für die Erstellung der Gesamtlaufzeit-Abstand-Relation für diesen Abstand zwischen Sender- und Empfänger-Netzknoten verwendet wird. Hierdurch kann die Messgenauigkeit des Verfahrens erhöht werden.

Bei einer besonders vorteilhaften Ausgestaltung des erfindungsgemäßen Verfahrens wird in dem Sender-Netzknoten beim Senden des Hinsignals am Ende des gesendeten Signalpakets (das heißt, wenn das letzte Bit des Signalpakets des Hinsignals gesendet worden ist) und beim Empfangen des Rücksignals am Ende des empfangenen Signalpakets (das heißt, wenn das letzte Bit des Signalpakets des Rücksignals empfangen worden ist) jeweils ein Zeitstempel gesetzt. Unter der Voraussetzung, dass das Rücksignal stets eine gleiche Größe (Bitzahl) hat, was insbesondere in den Standards für die drahtlose Kommunikation für Bestätigungssignale (ACK) im Allgemeinen der Fall ist, hat dies den Vorteil, dass die Gesamtlaufzeitmessung unabhängig von der Größe (Bitzahl) des Hinsignals ist.

Bei einer weiteren vorteilhaften Ausgestaltung des erfindungsgemäßen Verfahrens werden die gemessenen Gesamtlaufzeiten vor der Erstellung der Gesamtlaufzeit-Abstand-Relation gefiltert, um hierdurch die oberhalb eines bestimmten (wählbaren) Schwellwerts liegenden Gesamtlaufzeiten zu entfernen. Durch diese Maßnahme können fehlerhafte Signale, welche offensichtlich durch Reflexionen, Kollisionen und dergleichen entstanden sind, entfernt.

Vorteilhaft handelt es sich bei dem Nachrichtennetzwerk um ein drahtloses Nachrichtennetzwerk, welches insbesondere auf dem Standard IEEE 802.11 basiert. In diesem Fall, kann eine den meisten Übertragungsprotokollen zur drahtlosen Signalübertragung intrinsische Eigenschaft genutzt werden, wonach ein Bestätigungssignal nach Empfangen eines Datensignals, wie ACK im Standard IEEE 802.11, vom Empfänger-Netzknoten gesendet wird. Auf diese Weise kann ohne zusätzliche gerätetechnische Ausstattung, lediglich unter Nutzung der schon vorhandenen und zur gewöhnlichen Nachrichtenübermittelung genutzten gerätetechnischen Ausrüstung, und ohne das Vorsehen zusätzlicher exakter und synchronisierter Zeitgeber, mittels der erstellten Gesamtlaufzeit-Abstand-Relation der Abstand der Netzknoten, für welche die Laufzeit-Abstand-Relation erstellt wurde, ermittelt werden.

Die Erfindung erstreckt sich weiterhin auf eine zur Datenverarbeitung geeignete, elektronische Steuereinrichtung eines Nachrichtennetzwerks, die mit einem Programmcode versehen ist, welcher Steuerbefehle enthält, die die Steuereinrichtung zur Durchführung eines wie oben beschriebenen Verfahrens veranlassen. Die Steuereinrichtung kann Teil eines zentralen oder dezentralen Netzmanagements zur Steuerung der Nachrichtenübertragung des Nachrichtennetzwerks sein.

Des Weiteren erstreckt sich die Erfindung auf einen Netzknoten eines Nachrichtennetzwerks, welcher mit einer zur Datenverarbeitung geeigneten, elektronischen Steuereinrichtung ausgerüstet ist, die mit einem Programmcode versehen ist, welcher Steuerbefehle enthält, die die Steuereinrichtung zur Durchführung eines wie oben beschriebenen Verfahrens veranlassen.

Weiterhin erstreckt sich die Erfindung auf einen maschinenlesbaren Programmcode (Computerprogramm) für eine Steuereinrichtung eines Nachrichtennetzwerks, welcher Steuerbefehle enthält, die die Steuereinrichtung zur Durchführung eines wie oben beschriebenen Verfahrens veranlassen.

Darüber hinaus erstreckt sich die Erfindung auf ein Speichermedium (Computerprogrammprodukt)mit einem darauf gespeicherten maschinenlesbaren Programmcode, wie er oben beschrieben wurde.

Die Erfindung wird nun anhand eines Ausführungsbeispiels näher erläutert, wobei Bezug auf die beigefügten Figuren genommen wird.

Fig. 1 veranschaulicht in schematischer Weise die Signallaufzeiten bei der Übertragung eines Datensignals und eines zugehörigen Bestätigungssignals (ACK) in einem WLAN-System;

Fig. 2 ist ein Graph, in welchem die Anordnung von drei Access Points in einer durch die Koordinaten x, y aufgespannten Ebene und die Positionierung eines Clients an verschiedenen Orten (Kreuze) in schematischer Weise dargestellt ist;

Fig. 3A ist ein Graph, in welchem beispielhaft Gesamtsignallaufzeiten (RTT) gegen Abstände für einen ersten Access Point und einen an verschiedenen Orten platzierten Client aufgetragen sind;

Fig. 3B ist ein Graph, in welchem beispielhaft Gesamtsignallaufzeiten (RTT) gegen Abstände für einen zweiten Access Point und einen an verschiedenen Orten platzierten Client aufgetragen sind;

Fig. 3C ist ein Graph, in welchem beispielhaft Gesamtsignallaufzeiten (RTT) gegen Abstände für einen dritten Access Point und einen an verschiedenen Orten platzierten Client aufgetragen sind.

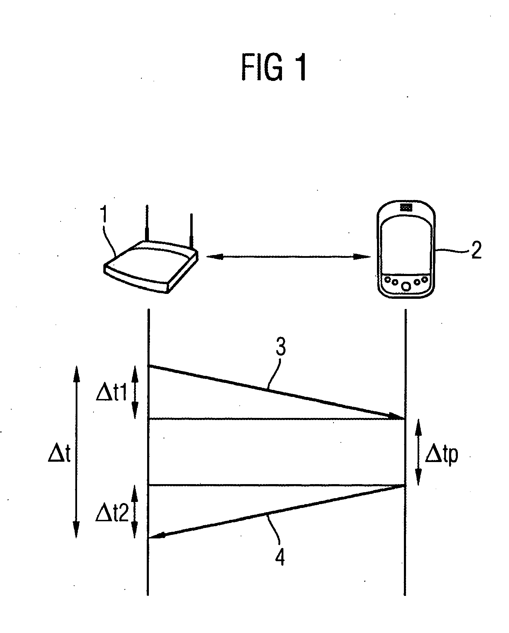

Sei zunächst Fig. 1 betrachtet. Im Ausführungsbeispiel ist die Signalübertragung zwischen einem Access Point 1 und einem Client 2 in einem auf dem Standard 802.11 basierenden WLAN-System veranschaulicht. In dem Standard 802.11 wird jedes vom Access Point 1 ausgesendete Datenpaket 3, nach Empfang des Datenpakets vom Client 2, durch ein vom Client 2 ausgesendetes Bestätigungssignal (ACK) 4 bestätigt. Die Übertragung des Datenpakets 3 dauert eine Zeitspanne $\Delta t_1$, die Übertragung des Bestätigungssignals 4 nimmt eine Zeitspanne $At_2$ in Anspruch. Zwischen dem Empfangen des Datenpakets 3 vom Client 2 und dem Aussenden des Bestätigungssignals 4 durch den Client 2 liegt im Allgemeinen eine Verzögerungszeit $\Delta t_p$.

Die Gesamtlaufzeit $\Delta t$ (RTT) des Datensignals 3 und des zugehörigen Bestätigungssignals 4 beträgt demnach:

$$\Delta t = \Delta t_1 + \Delta t_2 + \Delta t_p \, ,$$

wobei im Allgemeinen $\Delta t_1 = \Delta t_2$ gilt.

Die Verzögerungszeit $\Delta t_p$ ist unbekannt und variiert im Allgemeinen linear mit dem Abstand von Access Point 1 und Client 2.

Die Gesamtlaufzeit kann mithilfe der Zeitstempel ermittelt werden, welche beim Senden des Datenpakets 3 und beim Empfang des Bestätigungssignals 4 jeweils im Access Point 1 gesetzt werden. Wenn beim Senden des Datenpakets 3 im Access Point 1 ein Zeitstempel bei einer lokalen Zeit $t_{local1}$ gesetzt wird und beim Empfangen des Bestätigungssignals 4 im Access Point 1 ein Zeitstempel bei einer lokalen Zeit $t_{local2}$ gesetzt wird, kann die Gesamtlaufzeit von Hin- und Rücksignal (RTT) durch Differenzbildung $\Delta t = t_{local1} - t_{local2}$ ermittelt werden.

Vorteilhaft wird beim Senden des Datenpakets 3 im Access Point 1 ein Zeitstempel dann gesetzt, wenn das letzte Bit des Datenpakets 3 gesendet ist. Dies kann in der Weise erfolgen, dass das gesendete Datenpaket 3 vom Access Point 1 selbst sofort wieder empfangen wird (Empfängerschaltung des Access Points ist beim Senden angeschaltet). Das vom Access Point gesendete und unmittelbar empfangene Datenpaket 3 wird von der physikalischen Schicht 1 (OSI-Modell) zur MAC (Medium Access Control)-Schicht 2 (OSI-Modell) weitergeleitet, wobei in einem Header des Datenpakts 3 der Zeitstempel der lokalen Zeit ($t_{local1}$) gesetzt wird. In entsprechender Weise wird beim Empfangen des Bestätigungssignals im Access Point 1 das empfangene Datenpaket des Bestätigungssignals 4 von der physikalischen Schicht 1 zur MAC-Schicht 2 weitergeleitet und der Zeitstempel der lokalen Zeit ($t_{local2}$) gesetzt, wenn das letzte Bit des Bestätigungssignals 4 vom Access Point 1 empfangen ist. Die durch Differenzbildung der beiden gesetzten Zeitstempel bestimmte Gesamtlaufzeit ist somit unabhängig von der Bitzahl des Datenpakets 3, wenn das Bestätigungssignal stets eine gleiche Bitzahl hat.

Da das Aussenden des Bestätigungssignals 4 vom Client 2 von der MAC-Schicht (Schicht 2) durchgeführt wird, wenn der Client 2 für ihn bestimmte Daten empfängt, kann in vorteilhafter Weise die Bestimmung der Gesamtlaufzeit von Datenpaket 3 und Bestätigungssignal 4 nicht durch eine Firewall blockiert werden, welche im Allgemeinen in Schicht 3 (OSI-Modell) angeordnet ist.

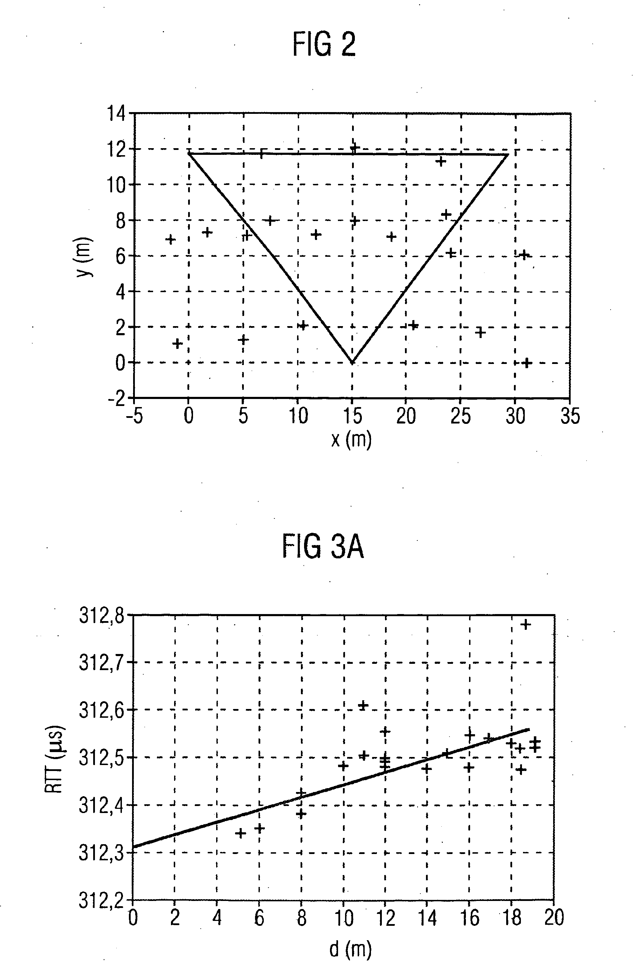

Zur weiteren Beschreibung des Ausführungsbeispiels des erfindungsgemäßen Verfahrens wird nun Bezug auf die Figuren 2 bis 5 genommen.

Sei zunächst Fig. 2 betrachtet, in welcher die Anordnung von drei verschiedenen Access Points in einer x-y-Ebene und die Positionierung eines Clients an verschiedenen Orten in schematischer Weise dargestellt ist.

Zur Durchführung des Verfahrens werden drei verschiedene Access Points in den drei Ecken des in Fig. 2 gezeigten Dreiecks angeordnet. Beispielsweise wird ein erster Access Point an der in Fig. 2 linken oberen Ecke, ein zweiter Access Point an der in Fig. 2 rechten oberen Ecke, und ein dritter Access Point an der in Fig. 2 unteren Ecke platziert.

Zunächst werden Laufzeitmessungen zwischen dem ersten Access Point und einem nacheinander an den jeweils mit einem Kreuz markierten Stellen platzierten Client durchgeführt. Jeweilige Gesamtlaufzeitmessungen von Signalpaaren werden in der in den Ausführungen zu Fig. 1 erläuterten Weise durchgeführt. Für jede Gesamtlaufzeitmessung wird zudem der Abstand zwischen dem ersten Access Point und dem Client ermittelt, beispielsweise durch Ausmessen mit einem Metermaß oder einem Laserabstandsmessgerät. In Fig. 3A sind die Ergebnisse dieser Messung graphisch dargestellt, wobei die Gesamtlaufzeiten (RTT) gegen die Abstände d aufgetragen sind. Anschließend wird eine Gesamtlaufzeit-Abstand-Relation zwischen den gemessenen Gesamtlaufzeiten der Signalpaare und den ermittelten Abständen des ersten Access Points und des Clients erstellt. Zu diesem Zweck wird eine lineare Anpassungskurve durch die Messdaten gelegt. Zur Bestimmung eines anderen, nicht gemessenen Abstands zwischen dem ersten Access Point und dem Client wird die Gesamtlaufzeit eines Signalpaars gemessen und der Abstand zwischen diesen beiden mittels der erstellten Gesamtlaufzeit-Abstand-Relation bestimmt.

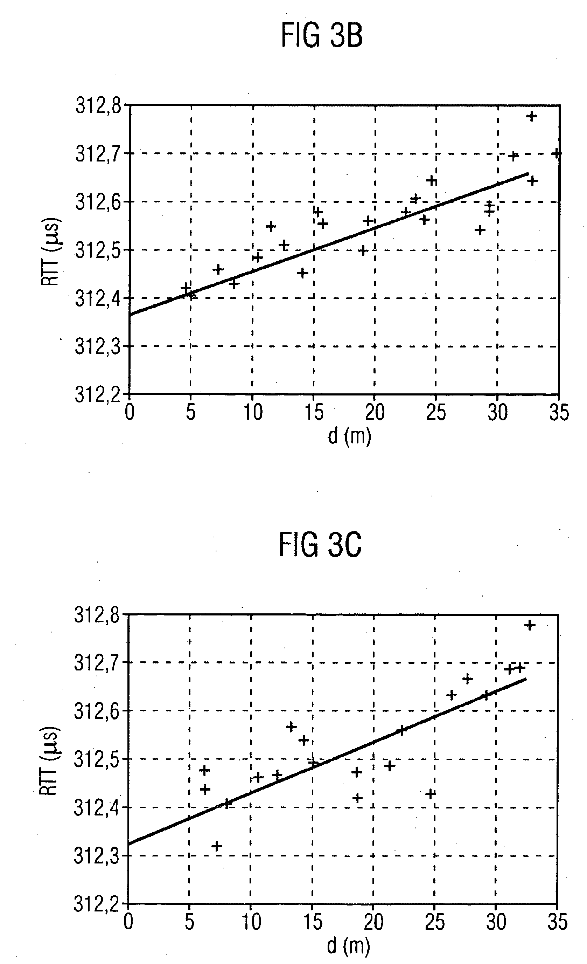

Anschließend werden Gesamtlaufzeitmessungen zwischen dem zweiten Access Point und einem nacheinander an den jeweils mit einem Kreuz markierten Stellen platzierten Client in analoger Weise durchgeführt. In Fig. 3B sind die Ergebnisse dieser Messung graphisch dargestellt, wobei die Gesamtlaufzeiten (RTT) gegen die Abstände d aufgetragen sind. Anschließend wird eine Gesamtlaufzeit-Abstand-Relation zwischen den gemessenen Gesamtlaufzeiten der Signalpaare und den ermittelten Relativabständen des zweiten Access Points und des Clients erstellt. Zu diesem Zweck wird eine lineare Anpassungskurve durch die Messdaten gelegt. Zur Bestimmung eines anderen, nicht gemessenen Relativabstands zwischen dem zweiten Access Point und dem Client wird die Gesamtlaufzeit eines Signalpaars gemessen und der Relativabstand zwischen diesen beiden mittels der erstellten Gesamtlaufzeit- Abstand-Relation bestimmt.

Anschließend werden Laufzeitmessungen zwischen dem dritten Access Point und einem nacheinander an den jeweils mit einem Kreuz markierten Stellen platzierten Client in analoger Weise durchgeführt. In Fig. 3C sind die Ergebnisse dieser Messung graphisch dargestellt, wobei die Gesamtlaufzeiten (RTT) gegen die Abstände d aufgetragen sind. Anschließend wird eine Laufzeit-Abstand-Relation zwischen den gemessenen Gesamtlaufzeiten der Signalpaare und den ermittelten Abständen des dritten Access Points und des Clients erstellt. Zu diesem Zweck wird eine lineare Anpassungskurve durch die Messdaten gelegt. Zur Bestimmung eines anderen, nicht gemessenen Abstands zwischen dem dritten Access Point und dem Client wird die Gesamtlaufzeit eines Signalpaars gemessen und der Abstand zwischen diesen beiden mittels der erstellten Gesamtlaufzeit-Abstand-Relation bestimmt.

Aus den Figuren 3A bis 3C wird ersichtlich, dass sich die lineare Anpassungskurven für die drei Access Points jeweils im Gradienten und in den Achsenschnittpunkten unterscheiden, was belegt, dass eine deterministische Gleichung zur Abstandsbestimmung aus einer Gesamtlaufzeitmessung wegen der hohen Ungenauigkeit aufgrund der Hardware-Unterschiede nicht geeignet ist. Es ist auch zu erkennen, dass der verschiedene Gradient der drei Ausgleichskurven keine konstante Lichtgeschwindigkeit widerspiegelt, aufgrund der Variationen in der Zeitdauer $\Delta t_p$, welche von Hardware und Abstand abhängig ist.

Da in dem dargestellten Verfahren Hin- und Rücksignale ausgenutzt werden, welche ohnehin zum Zwecke des Datenaustauschs versendet werden, kann in vorteilhafter Weise auf eine zusätzliche apparative Ausstattung zur Ermittlung des Abstands zwischen den Access Points und dem Client verzichtet werden. Insbesondere müssen keine zusätzlichen (im Allgemeinen sehr teure) Zeitgeber vorgesehen werden.

**Patentansprüche**

1. Verfahren zur Bestimmung des Abstands zwischen Netzknoten in einem paketvermittelten Nachrichtennetzwerk, in welchem von einem Sender-Netzknoten ein Hinsignal an einen Empfänger-Netzknoten und vom Empfänger-Netzknoten ein das Hinsignal bestätigendes Rücksignal an den Sender-Netzknoten gesendet werden, wobei in dem Sender-Netzknoten beim Senden des Hinsignals und beim Empfangen des Rücksignals jeweils ein Zeitstempel gesetzt wird, welches umfasst:

- Platzieren eines Sender-Netzknotens und eines Empfängernetzknotens mit verschiedenen Abständen zueinander, wobei für jeden Abstand die Gesamtlaufzeit eines Hin- und Rücksignals und der Abstand zwischen Sender- und Empfänger-Netzknoten erfasst werden;
- Bestimmen einer Gesamtlaufzeit-Abstand-Relation zwischen den erfassten Gesamtlaufzeiten der Hin- und Rücksignale und den erfassten Abständen zwischen Sender- und Empfänger-Netzknoten;
- Erfassen der Gesamtlaufzeit eines Hin- und Rücksignals der Sender- und Empfängernetzknoten und Bestimmen des Abstands der Sender- und Empfänger-Netzknoten mittels der Gesamtlaufzeit-Abstand-Relation.

2. Verfahren nach Anspruch 1, bei welchem bei einem gleichen Abstand zwischen Sender- und Empfänger-Netzknoten die Gesamtlaufzeiten mehrerer Hin- und Rücksignale erfasst und ein Mittelwert aus den erfassten Gesamtlaufzeiten gebildet wird.

3. Verfahren nach einem der Ansprüche 1 bis 2, bei welchem in dem Sender-Netzknoten beim Senden des Hinsignals am Ende des gesendeten Signalpakets und beim Empfangen des Rücksignals am Ende des empfangenen Signalpakets jeweils ein Zeitstempel gesetzt wird.

4. Verfahren nach einem der Ansprüche 1 bis 3, bei welchem die gemessenen Gesamtlaufzeiten vor der Erstellung der Gesamtlaufzeit-Abstand-Relation gefiltert werden, derart, dass oberhalb eines bestimmten Schwellwerts liegende Gesamtlaufzeiten entfernt werden.

5. Verfahren nach einem der Ansprüche 1 bis 4, bei welchem die Gesamtlaufzeit-Abstand-Relation mithilfe einer Ausgleichskurve erstellt wird.

6. Verfahren nach einem der Ansprüche 1 bis 5, bei welchem das Nachrichtennetzwerk ein drahtloses Nachrichtennetzwerk ist.

7. Verfahren nach Anspruch 6, bei welchem das drahtlose Nachrichtennetzwerk auf dem Standard IEEE 802.11 basiert.

8. Verfahren nach Anspruch 7, bei welchem das zweite Signalpaket ein ein Datenpaket bestätigendes Bestätigungssignal (ACK) ist.

9. Steuereinrichtung eines Nachrichtennetzwerks, die mit einem Programmcode versehen ist, welcher Steuerbefehle enthält, die die Steuereinrichtung zur Durchführung eines Verfahrens nach einem der Ansprüche 1 bis 8 veranlassen.

10. Netzknoten eines Nachrichtennetzwerks mit einer zur Datenverarbeitung geeigneten Steuereinrichtung, die mit einem Programmcode versehen ist, welcher Steuerbefehle enthält, die die Steuereinrichtung zur Durchführung eines Verfahrens nach einem der Ansprüche 1 bis 8 veranlassen.

11. Maschinenlesbarer Programmcode für eine Steuereinrichtung eines Nachrichtennetzwerks, welcher Steuerbefehle enthält, die die Steuereinrichtung zur Durchführung eines Verfahrens nach einem der Ansprüche 1 bis 8 veranlassen.

12. Speichermedium mit einem darauf gespeicherten maschinenlesbaren Programmcode gemäß Anspruch 11.

## Claims

1. Method for determining the distance between network nodes in a packet-switched communication network in which an outward signal is sent from a transmitter network node to a receiver network node and a return signal confirming the outward signal is sent from the receiver network node to the transmitter network node, with a timestamp being set in the transmitter network node when the outward signal is sent and when the return signal is received, which comprises:

- Placing a transmitter network node and a receiver network node at different distances from each other, with the overall delay time of an outward and return signal and the distance between transmitter and receiver network node being detected for each distance;

- Determining an overall delay time-to-distance relationship between the detected overall delay times of the outward and return signals and the detected distances between transmitter and receiver network nodes;

- Detecting the overall delay time of an outward and return signal of the transmitter and receiver network nodes and determining the distance between the transmitter and receiver network nodes by means of the overall delay time-to-distance relationship.

2. Method according to claim 1, in which, for an equal distance between transmitter and receiver network node, the overall delay times of a number of outward and return signals are detected and an average value is formed from the overall delay times detected.

3. Method according to one of claims 1 to 2, in which a timestamp is set in each case in the transmitter network node on sending the output signal at the end of the sent signal packet and on receiving the return signal at the end of the received signal packet.

4. Method according to one of claims 1 to 3, in which the measured overall delay times are filtered before the creation of the overall delay time-to-distance relationship such that overall delay times lying above a specific threshold value are removed.

5. Method according to one of claims 1 to 4, in which the overall delay time-to-distance relationship is created with the aid of a compensation curve.

6. Method according to one of claims 1 to 5, in which the communication network is a wireless communication network.

7. Method according to claim 6, in which the wireless communication network is based on the IEEE 802.11 standard.

8. Method according to claim 7, in which the second signal package is an acknowledgement (ACK) signal acknowledging a data packet.

9. Control device of a communication network which is provided with a program code which contains control commands which cause the control device to execute a method according to one of claims 1 to 8.

10. Network node of a communication network with a control device suitable for data processing which is provided with a program code which contains control commands which cause the control device to execute a method in accordance with one of claims 1 to 8.

11. Machine-readable program code for a control device of a communication network which contains control commands which cause the control device to execute a method in accordance with one of claims 1 to 8.

12. Storage medium, with a machine-readable program code in accordance with claim 11 stored thereon.

**Revendications**

1. Procédé de détermination de la distance entre des noeuds de réseau dans un réseau de messages à commutation de paquets, dans lequel un signal aller est envoyé par un noeud de réseau émetteur à un noeud de réseau récepteur et un signal retour qui confirme le signal aller est envoyé par le noeud de réseau récepteur au noeud de réseau émetteur, une horodate étant établie dans le noeud de réseau émetteur respectivement à l'émission du signal aller et à la réception du signal retour, comprenant :

- le positionnement d'un noeud de réseau émetteur et d'un noeud de réseau récepteur à différentes distances entre eux, le temps de propagation total d'un signal aller et retour et la distance entre noeud de réseau émetteur et noeud de réseau récepteur étant saisis pour chaque distance ;
- la détermination d'une relation entre temps de propagation total et distance établie entre les temps de propagation totaux saisis des signaux aller et retour et les distances saisies entre les noeuds de réseau émetteur et récepteur ;
- la saisie du temps propagation total d'un signal aller et retour des noeuds de réseau émetteur et récepteur et la détermination de la distance entre les noeuds de réseau émetteur et récepteur au moyen de la relation entre temps de propagation total et distance.

**2.** Procédé selon la revendication 1, dans lequel, étant donné une même distance entre noeuds de réseau émetteur et récepteur, les temps de propagation totaux de plusieurs signaux aller et retour sont saisis et une valeur moyenne est calculée à partir des temps de propagation totaux saisis.

**3.** Procédé selon l'une des revendications 1 à 2, dans lequel une horodate est respectivement établie, à l'émission du signal aller, à la fin du paquet de signal émis et, à la réception du signal retour, à la fin du paquet de signal reçu.

**4.** Procédé selon l'une des revendications 1 à 3, dans lequel les temps de propagation totaux mesurés sont filtrés avant l'établissement de la relation entre temps de propagation total et distance de telle manière que des temps de propagation totaux supérieurs à une valeur seuil déterminée sont éliminés.

**5.** Procédé selon l'une des revendications 1 à 4, dans lequel la relation entre temps de propagation total et distance est établie à l'aide d'une courbe de compensation.

**6.** Procédé selon l'une des revendications 1 à 5, dans lequel le réseau de messages est un réseau de messages sans fil.

**7.** Procédé selon la revendication 6, dans lequel le réseau de messages sans fil est basé sur le standard IEEE 802.11.

**8.** Procédé selon la revendication 7, dans lequel le deuxième paquet de signal est un signal de confirmation (ACK) qui confirme un paquet de données.

**9.** Dispositif de commande d'un réseau de messages, pourvu d'un code de programme qui contient des ordres de commande qui font exécuter au dispositif de commande un procédé selon l'une des revendications 1 à 8.

**10.** Noeud de réseau d'un réseau de messages avec un dispositif de commande adapté pour le traitement de données, lequel dispositif est pourvu d'un code de programme qui contient des ordres de commande qui font exécuter au dispositif de commande un procédé selon l'une des revendications 1 à 8.

**11.** Code de programme lisible par machine pour un dispositif de commande d'un réseau de messages, lequel code de programme contient des ordres de commande qui font exécuter au dispositif de commande un procédé selon l'une des revendications 1 à 8.

**12.** Support de mémoire stockant un code de programme lisible par machine selon la revendication 11.

# FIG 1

## FIG 2

## FIG 3A

## FIG 3B

## FIG 3C

EP 1 906 692 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040002346 A
- EP 1545145 A

**In der Beschreibung aufgeführte Nicht-Patentliteratur**

- **A. Günther et al.** Measuring Round Trip Times to Determine the Distance between WLAN Nodes. *Telecommunication Networks Group,* 2004
- **A. Aassie et al.** Time of Arrival Estimation for WLAN Indoor Positioning Systems using Matrix Pencil Super Resolution Algorithm. University of Magdeburg, Marz 2005
- **Izquierdo F. ; Ciurana M. ; Barcelo F. ; Paradelis J. ; Zola E.** Performance evaluation of TOA-based trilateration method to locate terminals in WLAN. *1st International Symposium on Wireless Pervasive Computing,* 16. Januar 2006, vol. 26, 1-6
- **S. Bartels.** *WIFI Location System,* Oktober 2005
- Speed of light measurement using ping. **J. Lepak et al.** Speed of light measurement using ping. Youngtown State University, Februar 2002